# FASCICULE DE BREVET EUROPEEN

(11) **EP 2 333 446 B1**
(45) Date de publication et mention de la délivrance du brevet: **09.08.2017**
(21) Numéro de dépôt: 10192274.8
(22) Date de dépôt: 23.11.2010
(51) Int. Cl.: F24F 12/00, F24C 15/20, F28G 1/16, B08B 9/032

(54) **Procédé de nettoyage d'une installation de ventilation, installation de ventilation et récupérateur thermique à double flux**
Verfahren zur Reinigung einer Lüftungsanlage, Lüftungsanlage und Doppelfluss-Wärmerückgewinnungsanlage
Method for cleaning a ventilation installation, ventilation installation and double-flow heat-recovery unit

(30) Priorité: 23.11.2009 FR 0905616
(43) Date de publication de la demande: 15.06.2011
(73) Titulaire: FRANCE AIR S.A., F-01700 Miribel (FR)
(72) Inventeur: Cachot, Lionel, 69400 Villefranche sur Saone (FR)
(74) Mandataire: Lavoix

(56) Documents cités:
- EP-A1- 2 063 193
- WO-A1-2005/073656
- FR-A1- 2 830 469
- FR-A1- 2 839 143
- FR-A1- 2 865 419
- US-A- 5 919 406
- US-A1- 2004 237 540

## Description

### DOMAINE TECHNIQUE DE L'INVENTION

L'invention est relative à un procédé de nettoyage d'une installation de ventilation comportant :
- des moyens d'extraction de l'air d'une première pièce contenant un air vicié chargé en graisses,
- des moyens d'insufflation d'air dans une seconde pièce,
- un récupérateur thermique muni d'un échangeur thermique à double flux dans lequel passe un premier flux d'air extrait de la première pièce et un second flux d'air insufflé dans la seconde pièce, lesdits premier et second flux d'air étant isolés l'un de l'autre.
- des moyens de nettoyage munis d'au moins un pulvérisateur de produit de nettoyage.

L'invention concerne également une installation de ventilation et un récupérateur thermique à double flux.

### ÉTAT DE LA TECHNIQUE

Il existe des récupérateurs avec échangeur thermique à double flux d'air dans le domaine tertiaire et industriel pour récupérer l'énergie contenue dans un réseau de conduites d'air vicié en transmettant l'énergie thermique de l'air vicié à de l'air frais ré-injecté dans le bâtiment.

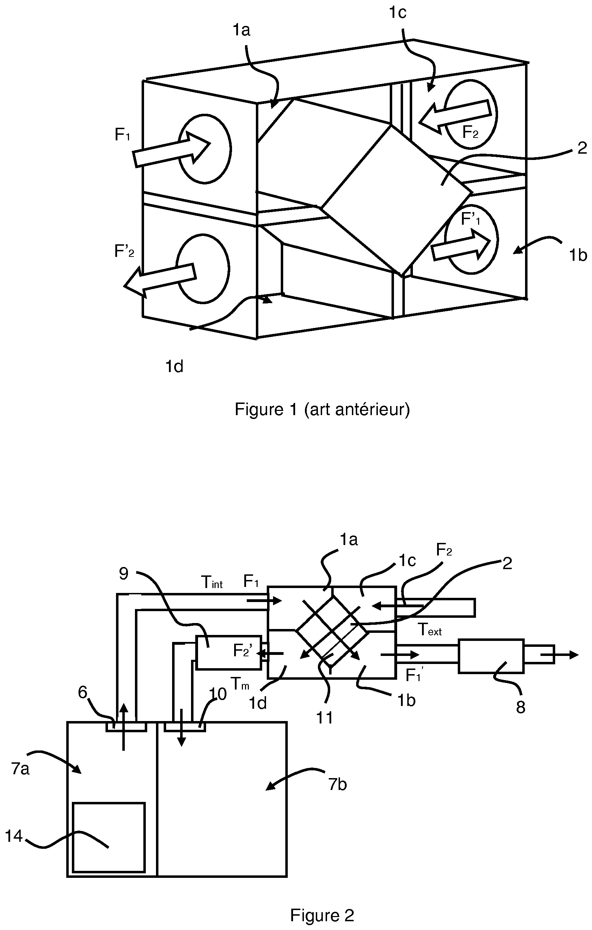

Comme l'illustre la figure 1, un récupérateur thermique à double flux comporte des premier 1 a, deuxième 1 b, troisième 1 c et quatrième 1 d compartiments. Un échangeur thermique 2 à plaques à flux croisés est disposé dans le volume interne du récupérateur, et permet le passage d'un premier flux d'air F₁, F₁' entre les premier et deuxième compartiments 1 a, 1b, et le passage d'un second flux d'air F₂, F₂' entre les troisième et quatrième compartiments 1 c, 1 d.

De tels récupérateurs nécessitent l'utilisation de filtres qui doivent être renouvelés fréquemment.

Il est connu, notamment de US-B-5 919 406, de pulvériser un agent de nettoyage mélangé à de l'eau dans le flux d'air extrait afin de nettoyer l'échangeur. Un système de nettoyage tel qu'utilisé dans cet art antérieur ne permet pas un nettoyage optimal de toutes les parties de l'échangeur.

### OBJET DE L'INVENTION

L'invention concerne un procédé de nettoyage d'une installation de ventilation comportant :
- des moyens d'extraction de l'air d'une première pièce contenant un air vicié chargé en graisses,
- des moyens d'insufflation d'air dans une seconde pièce,
- un récupérateur thermique muni d'un échangeur thermique à double flux dans lequel passe un premier flux d'air extrait de la première pièce et un second flux d'air insufflé dans la seconde pièce, lesdits premier et second flux d'air étant isolés l'un de l'autre,
- des moyens de nettoyage munis d'au moins un pulvérisateur de produit de nettoyage placés dans le premier flux d'air en amont de l'échangeur thermique selon le sens d'écoulement du premier flux d'air,
le procédé comportant au moins une étape de pulvérisation du produit de nettoyage. Ce procédé est caractérisé en ce qu'il comprend une étape préalable à l'étape de pulvérisation et consistant à détecter si le premier flux d'air s'écoule dans l'échangeur et en ce que l'étape de pulvérisation est mise en oeuvre uniquement si l'écoulement du premier flux d'air est détecté lors de l'étape préalable.

L'invention concerne également un récupérateur thermique à double flux comportant :
- des premier, deuxième, troisième et quatrième compartiments,
- un échangeur thermique à flux croisés permettant le passage d'un premier flux d'air entre les premier et deuxième compartiments, et le passage d'un second flux d'air entre les troisième et quatrième compartiments,
- des moyens de nettoyage disposés dans le premier compartiment et munis d'au moins un pulvérisateur de produit de nettoyage.
Ce récupérateur est caractérisé en ce qu'il comporte des moyens de détection de la circulation du premier flux d'air dans l'échangeur et des moyens adaptés pour déclencher la pulvérisation du produit de nettoyage uniquement si le premier flux d'air circule dans l'échangeur.

L'invention concerne également une installation de ventilation comportant :
- des moyens d'extraction de l'air d'une première pièce contenant un air vicié chargé en graisses, et
- des moyens d'insufflation d'air dans une seconde pièce.

Cette installation est caractérisée en ce qu'elle comporte en outre un récupérateur thermique tel que celui mentionné ci-dessus, en ce que le premier flux d'air passant dans l'échangeur thermique à double flux est extrait de la première pièce et le second flux d'air passant dans l'échangeur thermique à double flux est insufflé dans la seconde pièce, lesdits premier et second flux d'air étant isolés l'un de l'autre, et ce que le ou les pulvérisateurs de produit de nettoyage placés dans le premier flux d'air en amont de l'échangeur thermique selon le sens d'écoulement du premier flux d'air.

Des caractéristiques additionnelles de l'invention ressortent des revendications ci-après.

### DESCRIPTION SOMMAIRE DES DESSINS

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 illustre un récupérateur thermique à double flux selon l'art antérieur.
Les figures 2 et 3 illustrent deux variantes d'installation de ventilation selon l'invention.
La figure 4 illustre un récupérateur thermique à double flux équipé de moyens de nettoyage.
La figure 5 est une vue à plus grande échelle d'une partie interne du récupérateur correspondant au détail V à la figure 4, certaines pièces visibles à la figure 4 étant masquées, alors que d'autres pièces sont représentées uniquement à la figure 5.
La figure 6 illustre une vue interne d'un récupérateur thermique équipé de moyens d'obturation.
La figure 7 illustre à titre d'exemple un diagramme décisionnel de déclenchement des moyens de nettoyage.

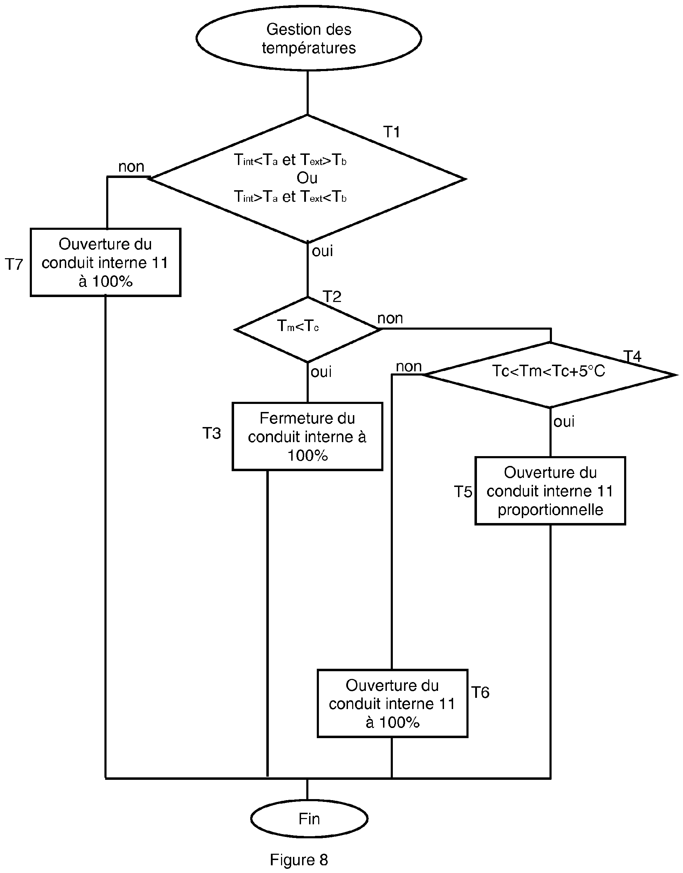

La figure 8 illustre, à titre d'exemple un diagramme décisionnel de gestion de la température de l'air insufflé

### DESCRIPTION DE MODES PREFERENTIELS DE REALISATION

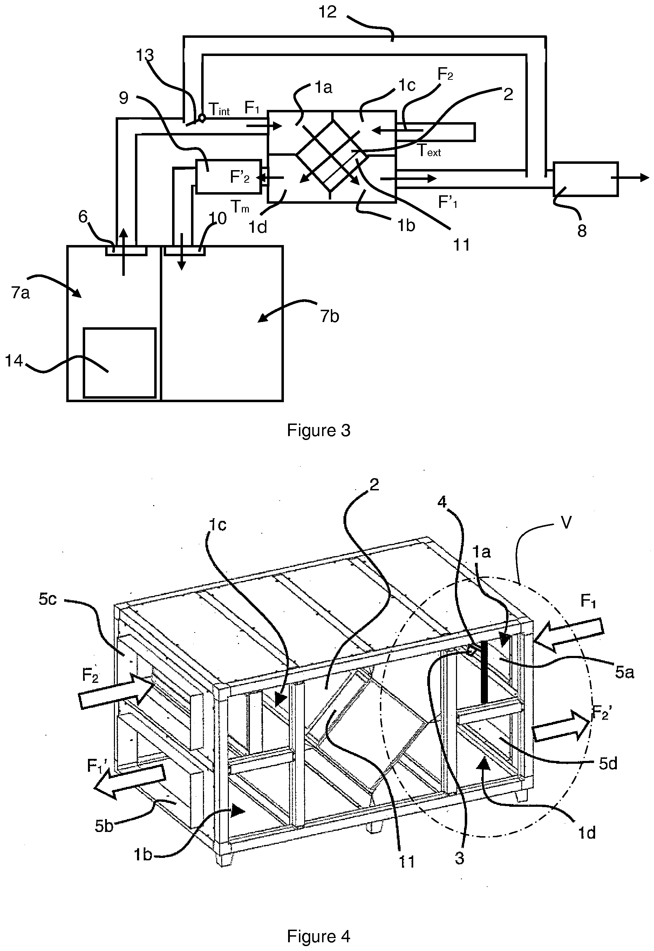

Comme illustré aux figures 2 et 3, l'installation de ventilation comporte des moyens d'extraction 8 de l'air d'une première pièce 7a contenant un air vicié chargé en graisses, et des moyens d'insufflation 9 d'air dans une seconde pièce 7b. L'installation comporte en outre un récupérateur thermique muni d'un échangeur thermique 2 à double flux dans lequel passe un premier flux d'air F₁, F₁' extrait de la première pièce 7a et un second flux d'air F₂, F₂' insufflé dans la seconde pièce 7b, lesdits premier et second flux d'air F₁, F₁' et F₂, F₂' étant isolés l'un de l'autre. Par isolés, on entend que ces flux d'air sont distincts et ne sont pas mis en contact au niveau du récupérateur. Ainsi, les calories de l'air extrait peuvent être transmises à l'air insufflé pour limiter la consommation d'énergie lors du chauffage de la seconde pièce 7b. Bien entendu, ceci est valable si la température de l'air extrait est supérieure à la température de l'air insufflé dans le cas où l'on souhaite chauffer, ou contrôler la température de l'air insufflé dans la seconde pièce 7b.

Les pièces représentent des pièces d'un bâtiment, par exemple une usine de traitement, un restaurant, une maison, etc.

De plus, l'installation comporte des moyens de nettoyage munis d'au moins un pulvérisateur 3 de produit de nettoyage. Les moyens de nettoyage sont placés dans le premier flux d'air F₁, F₁' en amont de l'échangeur thermique 2 selon le sens d'écoulement du premier flux d'air F₁, F₁'. La circulation du premier flux d'air F₁, F₁' permet alors d'emmener les particules volatiles pulvérisées au travers de l'échangeur thermique 2 afin de le nettoyer. En effet, sans moyens de nettoyage, les graisses comprises dans le premier flux d'air F₁, F₁' se déposeraient dans l'échangeur thermique 2 jusqu'à l'obstruer, pouvant entraîner une réduction de l'efficacité de l'échange thermique ou endommager l'installation. Les moyens de nettoyage peuvent en outre comporter un réservoir relié au pulvérisateur. De préférence, un tel réservoir est équipé d'une jauge émettant un signal d'alerte lorsque ce dernier est à un niveau trop bas.

Afin de limiter l'entretien du récupérateur, des filtres à graisse peuvent être disposés dans le premier flux d'air en amont du récupérateur thermique 2.

Selon une variante, le pulvérisateur 3 est un système de pulvérisation par brouillard sec.

De préférence, le produit de nettoyage est un nettoyant à base de bactéries sélectionnées pour leurs aptitudes à dégrader les graisses en gaz carbonique et en eau. De telles bactéries émettent dans leur environnement des lipases de leur fabrication pour couper les graisses en petits morceaux. Ces morceaux de petites tailles peuvent être absorbés par les bactéries qui vont les dégrader en CO₂ et H₂O. Cette réaction présente en outre l'avantage de limiter les mauvaises odeurs. La dégradation des graisses permet aux bactéries de se multiplier afin d'améliorer le nettoyage. Un tel produit présente l'avantage de dégrader complètement les huiles et les graisses, de plus, il est non corrosif et ne dégage aucune toxicité.

Aucune quantité d'eau n'est utilisée lors de la pulvérisation du produit de nettoyage ni dans aucune phase de nettoyage, ce qui permet d'éviter des contraintes de raccordement à un réseau d'eau et les travaux d'installation que cela implique.

Selon un mode de réalisation, le récupérateur thermique comporte un conduit interne 11 formant une dérivation du second flux d'air F₂, F₂', l'échangeur thermique 2 et ledit conduit interne 11 étant chacun munis de moyens d'obturation permettant le passage du second flux d'air F₂, F₂' par le conduit interne 11 et/ou l'échangeur thermique 2. Les moyens d'obturation permettent de bloquer l'entrée du second flux d'air F₂, F₂' dans l'échangeur thermique lorsque ceux-ci occupent une position fermée, le second flux d'air F₂, F₂' passant alors en totalité par le conduit interne 11. Ceci permet avantageusement de régler au mieux l'échange thermique entre les deux flux d'air. Selon le produit de nettoyage, utilisé, la chaleur peut être un catalyseur de la réaction de dégradation des graisses. Ainsi, lors d'un nettoyage, le second flux d'air sera, de préférence, totalement dérivé par le conduit interne 11, notamment si la température du second flux d'air est inférieure à la température du premier flux d'air.

Cette régulation est mise en oeuvre par une unité de contrôle 100 des moyens d'obturation permettant de contrôler la température de l'air insufflé dans la seconde pièce 7b en jouant sur la répartition du second flux d'air F₂, F₂' entre l'échangeur thermique 2 et le conduit interne 11. L'installation peut aussi comporter des première, deuxième et troisième sondes de températures respectivement représentatives de la température Tᵢₙₜ du premier flux d'air F₁, F₁' en amont de l'échangeur thermique 2, de la température Tₘ du second flux d'air F₂, F₂' en aval de l'échangeur thermique 2 et de la température Tₑₓₜ du second flux d'air F₂, F₂' en amont de l'échangeur thermique 2. Les données de ces sondes de températures peuvent être utilisées par l'unité de contrôle 100 pour contrôler les moyens d'obturation.

Grâce à la régulation, il est possible de gérer automatiquement la restitution de l'énergie transmise par l'échangeur. L'air extrait est à une température intérieure Tᵢₙₜ mesurée par la première sonde de température et le second flux d'air F₂, F₂' est à une température extérieure Tₑₓₜ mesurée par la troisième sonde de température. En obturant plus ou moins l'échangeur thermique 2 et le conduit interne 11, il est possible de contrôler la température Tₘ du second flux d'air F₂, F₂' en aval du récupérateur thermique 2. À titre d'exemple particulier de réalisation, l'installation peut comporter une température consigne T_{c}, cette température peut être comparée à la température Tₘ représentative de la température du second flux d'air mesurée par la deuxième sonde de température. Ainsi, si T_{c} est inférieure à Tₘ, le débit du second flux d'air F₂, F₂' traversant l'échangeur thermique 2 est diminué et le débit du second flux d'air traversant le conduit interne 11 est augmenté proportionnellement de sorte à ce que Tₘ se rapproche de T_{c}, et vice-versa.

En été, il n'est pas forcément nécessaire de renvoyer de l'air chaud à l'intérieur de la seconde pièce 7b. Il est alors possible d'éviter l'échange thermique en obturant complètement l'échangeur thermique 2 tout en laissant ouvert à 100% le conduit interne 11 de sorte que la température de l'air insufflé reste sensiblement égale à Tₑₓₜ.

Selon un exemple particulier de réalisation, l'unité de contrôle 100 comporte en outre une température consigne intérieure Tₐ et une température consigne extérieure T_{b}. Si la température intérieure Tᵢₙₜ et la température extérieure Tₑₓₜ sont respectivement supérieures aux températures consigne intérieure Tₐ et extérieure T_{b}, alors le conduit interne 11 est totalement ouvert. A titre d'exemple, la température consigne intérieure peut être égale à 18°C et la température consigne extérieure peut être égale à 14°C ceci permet de refroidir ou d'empêcher de renvoyer de l'air chaud dans la cuisine quand l'air extrait de cette dernière est trop chaud.

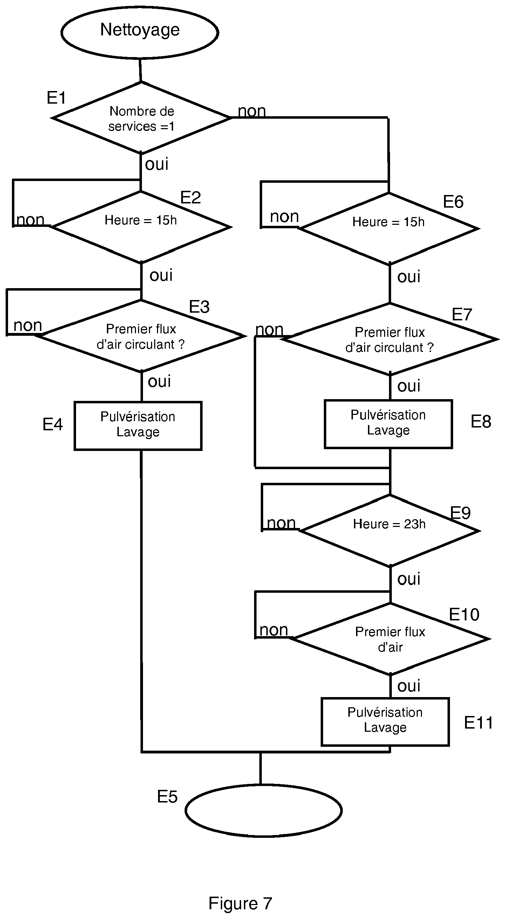

De plus, selon une implémentation de l'unité de contrôle 100 illustrée à la figure 7, si la température intérieure Tᵢₙₜ est inférieure à la température consigne intérieure Tₐ et la température extérieure Tₑₓₜ supérieure à la température consigne extérieure T_{b}, ou si la température intérieure Tᵢₙₜ est supérieure à la température consigne intérieure Tₐ et que la température extérieure Tₑₓₜ est inférieure à la température consigne extérieure T_{b} ((Tᵢₙₜ<Tₐ et Tₑₓₜ>T_{b}) ou (Tᵢₙₜ>Tₐ et Tₑₓₜ<T_{b}) (étape T1)) alors (sortie oui de T1):
- Si la température Tₘ mesurée par la deuxième sonde de température est inférieure à la température consigne T_{c} (étape T2) alors 100% du second flux d'air traverse l'échangeur thermique 2, c'est-à-dire que le conduit interne 11 est totalement obturé (étape T3),
- Si la température Tₘ mesurée par la deuxième sonde de température est supérieure à la température consigne T_{c} (sortie non de l'étape T2) alors si (étape T4) la température Tₘ mesurée par la deuxième sonde de température est inférieure à la température consigne T_{c} plus une variation x de température (5°C dans l'exemple) alors le conduit interne 11 et l'échangeur thermique 2 sont plus ou moins ouverts (étape T5) sinon il est considéré que l'air est trop chaud et le conduit interne 11 est ouvert à 100% (étape T6) alors que l'échangeur thermique est totalement obturé.

Dans le cas où il serait répondu non au test de l'étape E1, alors le conduit interne 11 est ouvert à 100% (étape T7) et l'échangeur thermique 2 est totalement obturé.

Comme précisé précédemment, c'est la circulation du premier flux d'air F₁, F₁' qui permet une bonne distribution du produit de nettoyage dans l'échangeur thermique. A cet effet, l'installation comprend des moyens de détection 200 de la circulation du premier flux d'air. En effet, si le premier flux d'air F₁, F₁' ne circule pas, il est préférable de ne pas pulvériser le produit de nettoyage afin de l'économiser ou d'éviter qu'une température d'air trop froide lors de la pulvérisation nuise à l'efficacité du produit de nettoyage.

De préférence, les moyens de détection 200 de la circulation du premier flux d'air comportent un pressostat muni d'un premier capteur de pression disposé dans le premier flux d'air F₁, F₁', de préférence en amont de l'échangeur thermique, et d'un second capteur de pression disposé à l'extérieur du récupérateur. Si la pression mesurée par le premier capteur est supérieure à la pression mesurée par le second capteur, alors il y a circulation du premier flux d'air F₁, F₁'.

Les moyens de détection 200 de la circulation du premier flux d'air sont adaptés pour communiquer par l'intermédiaire de signaux électriques S200 avec l'unité de contrôle 100. Si l'unité de contrôle 100 reçoit des moyens de détection l'information que le premier flux d'air F₁, F₁' circule dans l'échangeur 2, elle lance la pulvérisation du produit de nettoyage.

Bien entendu, l'homme du métier pourra disposer tout type de moyens permettant de détecter la présence du premier flux d'air F₁, F₁'. Grâce aux pressostats, il peut aussi être possible de vérifier si le débit du second flux d'air est suffisant avant de déclencher un nettoyage. Pour les mêmes raisons que celles évoquées précédemment, si le débit n'est pas suffisant, les particules peuvent ne pas traverser convenablement l'échangeur thermique 2, et le nettoyage n'est pas optimum.

Afin de ne pas endommager l'installation, il est possible d'utiliser des moyens de détection de l'encrassement de l'échangeur thermique 2 au niveau du passage du premier flux d'air F₁, F₁'. En cas de détection de l'encrassement, l'extraction d'air pourra être arrêtée, ou les moyens de pulvérisation mis en route pour désencrasser l'échangeur thermique 2.

De préférence, les moyens de détection de l'encrassement comportent un pressostat muni d'une première sonde de pression disposée dans le premier flux d'air F₁, F₁' en amont de l'échangeur thermique 2, et d'une seconde sonde de pression disposée dans le premier flux d'air F₁, F₁' en aval de l'échangeur thermique 2. Si les valeurs des première et seconde sondes sont sensiblement égales, alors l'échangeur thermique n'est pas encrassé. Par contre si la pression mesurée en amont de l'échangeur thermique est nettement supérieure à la pression mesurée en aval de l'échangeur thermique, alors un encrassement est détecté.

De préférence, la première pièce 7a est un local de préparation culinaire. Un tel local est en général saturé en graisse et son air est chauffé par les moyens de cuisson 14 tels que des pianos, des fours, etc. Notamment lorsque ce local est une cuisine professionnelle.

Selon un mode de réalisation particulier, les première et seconde pièces 7a et 7b forment en fait une seule et même pièce. Il peut, par exemple, s'agir d'un local de préparation culinaire.

Selon un perfectionnement illustré à la figure 3, l'installation comporte une protection incendie munie d'au moins une conduite de dérivation 12 reliant une bouche d'extraction 6 disposée dans la première pièce 7a aux moyens d'extraction 8. Autrement dit, la conduite de dérivation 12 est en parallèle du récupérateur. La dérivation peut être réalisée par un clapet 13 venant soit obturer la conduite reliant la bouche d'extraction 6 au récupérateur soit obturer la conduite de dérivation 12. Ainsi, le clapet 13 peut, en cas d'incendie, obturer la conduite allant au récupérateur et laisser passer l'air par la conduite de dérivation 12 afin d'extraire au mieux les fumées sans les faire passer par l'échangeur thermique 2. Dans ce cas de figure, le clapet 13 est, de préférence, de type coupe-feu.

Selon un mode de réalisation particulier illustré à la figure 4, le récupérateur thermique à échangeur à double flux comporte des premier, deuxième, troisième et quatrième compartiments 1 a, 1 b, 1 c, 1 d. L'échangeur thermique 2 à flux croisés, disposé dans le récupérateur, permet le passage d'un premier flux d'air F₁, F₁' entre les premier et deuxième compartiments 1 a, 1b, et le passage d'un second flux d'air F₂, F₂' entre les troisième et quatrième compartiments 1 c, 1 d. De préférence, le premier compartiment 1 a comporte les moyens de nettoyage munis d'au moins un pulvérisateur 3 de produit de nettoyage. Le pulvérisateur 3 est, de préférence, fixé sur une rampe 4 reliant deux parois opposées du premier compartiment 1 a, ladite rampe 4 pouvant être sensiblement perpendiculaire au premier flux d'air F₁, F₁'. Ainsi, la pulvérisation du produit de nettoyage s'effectue au plus proche de l'échangeur thermique 2. Le pulvérisateur 3 peut comporter une buse agencée de sorte que la projection du produit de nettoyage se fasse en direction de l'échangeur thermique 2 et couvre une surface entière de l'échangeur munie de passages permettant de faire passer le premier flux d'air F₁, F₁' du premier au deuxième compartiment 1 a, 1 b.

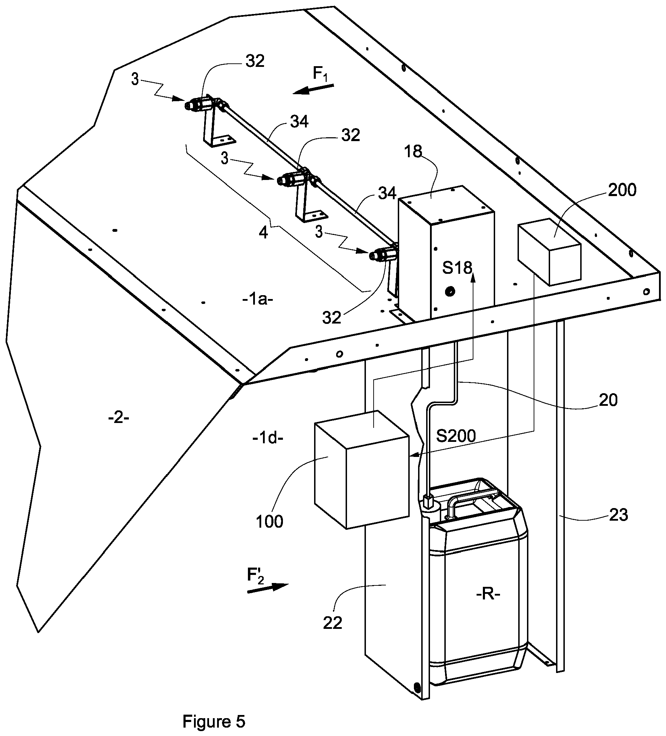

Selon des caractéristiques communes à tous les modes de réalisation de l'invention, et représentées à la figure 5, sur laquelle des éléments structurels du récupérateur sont masqués ou partiellement arrachés pour la clarté du dessin, le pulvérisateur 3 est alimenté par une pompe 18 contrôlée par l'unité de contrôle 100 et reliée à un réservoir R de produit de nettoyage par une conduite 20. Le réservoir R est de préférence logé entre deux cloisons 22 et 23 permettant de l'isoler du flux d'air F₁, F₁'. Ce réservoir est autonome, en ce sens qu'il n'est pas raccordé à un réseau d'eau.

Selon un mode de réalisation particulier représenté à la figure 5, le pulvérisateur 3 comporte trois buses 32 reliées à la pompe 18 par des tubes d'alimentation 34. Les buses 32 sont alignées selon un axe transversal du récupérateur et dirigées selon le sens de circulation du flux d'air F₁, F₁'.

Le récupérateur est destiné à être installé dans un réseau de conduites d'une installation de ventilation (figure 2 et 3). Ainsi, chaque compartiment 1 a, 1 b, 1 c, 1 d comporte une ouverture 5a, 5b, 5c, 5d laissant libre la circulation du flux associé.

À titre d'exemple particulier, le récupérateur a une forme générale parallélépipédique qui définit un volume interne. Ce volume interne est divisé en des premier, deuxième, troisième et quatrième compartiments 1 a, 1 b, 1 c, 1 d de tailles sensiblement identiques. Le récupérateur comporte quatre ouvertures 5a, 5b, 5c, 5d, chacune étant associée à un seul compartiment 1 a, 1 b, 1 c, 1 d. L'échangeur thermique 2 est disposé de sorte que le premier flux d'air F₁, F₁' passe du premier compartiment 1 a au deuxième compartiment 1 b et le second flux d'air F₂, F₂' passe du troisième compartiment 1 c au quatrième compartiment 1 d, en traversant chacun l'échangeur thermique 2 de sorte que le premier flux d'air F₁, F₁', étant un flux d'air chaud, réchauffe le second flux d'air F₂, F₂'. L'échangeur thermique 2 est, de préférence, constitué d'une pluralité de plaques disposées les unes sur les autres de sorte à former un hexaèdre. Chaque plaque de l'échangeur thermique 2 peut comporter une pluralité de cannelures sensiblement parallèles les une aux autres formées dans le plan de la plaque, ou une pluralité de passages débouchant formés dans le plan de la plaque. Deux plaques accolées sont disposées de sorte que les cannelures/passages de la première plaque soient sensiblement perpendiculaires aux cannelures/passages de la seconde plaque. Ainsi, les premier F₁, F₁' et second F₂, F₂' flux d'air se croisent perpendiculairement en traversant chacun l'échangeur thermique 2 par deux faces distinctes de l'hexaèdre. Les cannelures ou passages de deux faces opposées de l'hexaèdre débouchent dans les premier et deuxième compartiments 1 a, 1 b et les cannelures/passages de deux autres faces opposées débouchent dans les troisième et quatrième compartiments 1 c, 1 d.

L'échangeur est, de préférence, formé dans un matériau fortement conducteur de la chaleur pour optimiser l'échange thermique entre les premier et second flux d'air.

De manière générale, l'échangeur thermique 2 peut être traité à la peinture acrylique, empêchant ainsi la graisse d'adhérer aux parois des passages de l'échangeur 2.

Le cas échéant, le conduit interne 11 peut être situé dans le récupérateur (figure 4). Il relie alors le troisième compartiment 1 c au quatrième compartiment 1 d. La figure 5 illustre une vue interne du récupérateur au niveau du troisième compartiment 1 c. Sur cette figure 5, l'échangeur thermique 2 et le conduit de dérivation sont situés côte à côte. Les moyens d'obturation sont représentés par des volets 15a, 15b. Au-dessus de l'échangeur thermique 2, les volets 15a sont en position ouverte, et au-dessus du conduit interne 11 les volets 15b sont en position fermée (sur la figure 5, le conduit interne 11 est caché par les volets 15b horizontaux car ce dernier est obturé à 100%. Bien entendu, l'agencement de l'échangeur thermique 2, du conduit interne 11 et des volets 15a, 15b peut être adapté par l'homme du métier. De préférence, les volets 15a, 15b sont motorisés par des servomoteurs. Le servomoteur des volets 15a associés à l'échangeur thermique 2 est, de préférence, proportionnellement inversé par rapport au servomoteur associé aux volets 15b du conduit interne 11, c'est-à-dire que lorsque l'échangeur thermique 2 est obturé à 100%, le conduit de interne 11 est ouvert à 100%, et qu'entre ces deux positions, l'échangeur 2 et le conduit interne 11 sont plus ou moins obturés.

De préférence, les moyens de détection 200 de la circulation du premier flux d'air, décrits ci-dessus, sont intégrés dans le récupérateur. Comme décrit précedemment, cette détection peut être réalisée par un pressostat à deux capteurs de pression, le premier capteur du pressostat est disposé dans le premier compartiment 1 a et le second capteur est disposé à l'extérieur du récupérateur.

De la même manière, les moyens de détection de l'encrassement décrit ci-dessus peuvent être intégrés au récupérateur. De préférence, cette détection est réalisée par un pressostat à deux sondes de pression, la première sonde de pression est disposée dans le premier compartiment 1a, et la seconde sonde de pression disposée dans le second compartiment 1 b.

Plus particulièrement, comme illustré à la figure 2, l'installation de ventilation peut comporter une bouche d'extraction d'air 6 disposée dans la première pièce 7a, et reliée au premier compartiment 1 a du récupérateur. Les moyens d'extraction d'air 8 sont reliés au deuxième compartiment 1 b pour permettre l'extraction de l'air de la première pièce 7a par la bouche d'extraction 6 en formant le premier flux d'air (F₁, F₁').

L'installation peut comporter, en outre, des moyens d'insufflation 9 pour former le second flux d'air (F₂, F₂'), et un diffuseur 10 disposé dans la seconde pièce 7b. Le diffuseur 10 est relié au quatrième compartiment 1d du récupérateur thermique pour la diffusion du second flux d'air (F₂, F₂') réchauffé par le premier flux d'air (F₁, F₁'), lors de son passage dans l'échangeur thermique 2.

Bien entendu dans cet exemple, les première et seconde pièces 7a, 7b peuvent former une unique pièce.

Selon une variante (non représentée), le diffuseur 10 est relié au quatrième compartiment 1 d par l'intermédiaire des moyens d'insufflation 9. Autrement dit, les moyens d'insufflation sont disposés entre le diffuseur 10 et le quatrième compartiment 1 d du récupérateur.

Selon une autre variante, les moyens d'insufflation 9 d'air sont reliés au troisième compartiment 1 c pour générer le second flux d'air en amont du récupérateur.

De manière générale applicable à tous les modes de réalisation, les moyens d'insufflation 9 et les moyens d'extraction 8 peuvent se présenter sous la forme d'un caisson muni d'un ventilateur centrifuge. Lorsque les moyens d'insufflation 9 sont disposés entre le quatrième compartiment 1 d et le diffuseur 10, ils peuvent comporter un dispositif de chauffage (non représenté) pour réchauffer le second flux d'air F₂, F₂' si ce dernier n'est pas assez chaud après son passage dans le récupérateur, ou encore refroidir l'air par des moyens de climatisation.

Les éléments constitutifs de l'installation peuvent être reliés entre eux par des conduites. De préférence, les conduites situées entre la bouche d'extraction 6 et le premier compartiment 1 a sont isolées thermiquement de sorte à maintenir la température de l'air circulant dans ces conduites la plus proche de celle de l'air aspiré par la bouche d'extraction 6. Il en va de même pour les conduites situées entre le diffuseur 10 et le quatrième compartiment 1d pour maintenir la température du second flux d'air F₂, F₂' la plus proche de sa température au niveau de la sortie de l'échangeur thermique 2 dans le quatrième compartiment 1d.

Afin d'optimiser le réchauffement du second flux d'air F₂, F₂' dans le mode de réalisation où la première pièce 7a est une cuisine, la bouche d'extraction 6 est, de préférence, située au-dessus d'un appareil de cuisson 14 dégageant une forte température comme, par exemple, un four ou un piano de cuisson.

Dans le cas d'une installation dans une cuisine professionnelle, la pulvérisation du produit de nettoyage peut être réalisée à chaque fin de service de l'échangeur, ou à des heures de service paramétrables. Cette pulvérisation n'a lieu, de préférence, que si les moyens d'extraction sont en route de sorte que le premier flux d'air F₁, F₁' chargé de ce produit de nettoyage puisse traverser l'échangeur thermique 2.

Un procédé de ventilation utilise une installation telle que définie précédemment. Un tel procédé comporte au moins une étape de pulvérisation du produit de nettoyage. Avant pulvérisation du produit de nettoyage, la présence de circulation du premier flux d'air F₁, F₁' est vérifiée et le produit pulvérisé uniquement si ledit premier flux d'air F₁, F₁' circule. Cette vérification est mise en oeuvre par les moyens de détection 200 de la circulation du premier flux d'air tels que décrit ci-dessus.

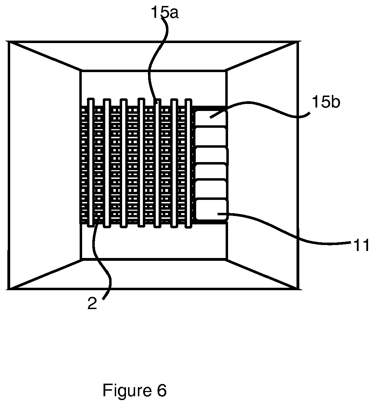

À titre d'exemple particulier de réalisation, l'étape de nettoyage peut être régie par le diagramme de la figure 6. Le diagramme part du postulat que l'installation de ventilation est installée pour extraire l'air d'une cuisine professionnelle à un ou deux services (midi ou soir, ou midi et soir). Ainsi, dans une première étape E1, il est vérifié si le nombre de services est égal à 1, si oui, alors l'heure de fin de service est surveillée (étape E2). Dans l'exemple, la fin du service est programmée à 15 heures, ainsi, tant que cette heure n'est pas atteinte, l'étape E2 boucle sur elle-même (sortie non). Dès que l'heure de fin de service est atteinte, le nettoyage passe en étape E3 de vérification de la circulation du premier flux d'air F₁, F₁'. Si le premier flux d'air F₁, F₁' ne circule pas, l'étape E3 boucle sur elle-même (sortie non) afin d'éviter de pulvériser pour rien du produit de nettoyage. En effet, sans circulation du premier flux d'air F₁, F₁', le produit ne traversera pas l'échangeur thermique 2 et ce dernier ne sera pas désencrassé. Au contraire, si le premier flux d'air F₁, F₁' circule (sortie oui de E3), alors l'unité de commande 100 envoie un signal électrique S18 à la pompe 18 pour lancer la pulvérisation du produit (étape E4 de nettoyage), les particules en suspension sont entraînées par le premier flux d'air F₁, F₁' de sorte à nettoyer correctement l'échangeur thermique 2 et le nettoyage prend fin (étape E5). Si au niveau de l'étape E1, le nombre de services n'est pas égal à 1 (sortie non de E1), alors il est considéré qu'il y a un service du midi et un service du soir. Dès lors, l'heure de fin du premier service est surveillée (étape E6). Dans l'exemple, la fin du premier service est programmée à 15 heures, ainsi, tant que cette heure n'est pas atteinte, l'étape E6 boucle sur elle-même (sortie non). Dès que l'heure de fin de service est atteinte, le nettoyage passe en étape E7 de vérification de la circulation du premier flux d'air F₁, F₁'. Si le premier flux d'air F₁, F₁' circule (sortie oui de l'étape E7), alors l'unité de contrôle envoie à la pompe 18 le signal S18 de lancement de la pulvérisation du produit (étape E8) de nettoyage, les particules en suspension sont entraînées par le premier flux d'air de sorte à nettoyer correctement l'échangeur thermique puis le nettoyage passe en étape E9 d'attente de la fin du deuxième service. Si dans l'étape E7 le premier flux d'air ne circule pas, (sortie non de l'étape E7), alors on passe directement à l'étape E9 d'attente de la fin du deuxième service. Dans l'étape E9, la fin du deuxième service est programmée à 23 heures. Dès que l'heure de fin de service est atteinte, le nettoyage passe en étape E10 de vérification de la circulation du premier flux d'air. Si le premier flux d'air ne circule pas, l'étape E10 boucle sur elle-même (sortie non) afin d'éviter de pulvériser pour rien du produit de nettoyage. Au contraire, si le premier flux d'air circule (sortie oui de l'étape E9), alors le produit est pulvérisé (étape E11 de nettoyage), les particules en suspension sont entraînées par le premier flux d'air F₁, F₁' de sorte à nettoyer correctement l'échangeur thermique 2 et le nettoyage prend fin (étape E5).

Bien entendu le diagramme illustré à la figure 6 n'est qu'un exemple de réalisation que l'homme du métier pourra adapter en fonction du nombre de services.

Selon une variante, le produit de nettoyage peut être catalysé par la chaleur. En règle générale, le second flux d'air F₂, F₂' est plus froid que le flux d'air extrait F₁, F₁', notamment lorsque l'air extrait l'est d'une cuisine munie d'appareils chauffants. Dès lors, afin d'améliorer la réaction catalytique, la totalité du second flux d'air F₂, F₂' est dérivée de l'échangeur thermique avant la pulvérisation, de sorte qu'il ne refroidisse pas le premier flux d'air F₁, F₁' par échange thermique. Cette dérivation peut être mise en oeuvre par l'utilisation des moyens d'obturation et du conduit interne 11.

En hiver, il faut prendre des précautions de protection de l'échangeur thermique, notamment lorsque le second flux d'air F₂, F₂' provient directement de l'extérieur. Ainsi, la température du second flux d'air F₂, F₂' en amont de l'échangeur thermique étant inférieure à une valeur seuil, le fonctionnement des moyens de nettoyage est bloqué, et la totalité du second flux d'air F₂, F₂' est dérivée de l'échangeur thermique 2, par exemple par le conduit interne 11. En effet, si la température du second flux d'air F₂, F₂' est trop basse, elle peut amener à givrer l'échangeur thermique 2, par exemple par condensation ou lors de la pulvérisation du produit de nettoyage, pouvant entraîner une dégradation physique de ce dernier.

En cas de détection de l'encrassement, le produit de nettoyage est pulvérisé et/ou un message d'alerte est envoyé à des moyens de gestion d'alertes. Sur une alerte d'encrassement, un nettoyage par exemple manuel pourra être prévu. Les moyens de gestion d'alertes peuvent comprendre un ordinateur.

Sans être directement touchées par des obligations réglementaires, telle que la réglementation thermique, les cuisines professionnelles s'orientent progressivement vers des solutions économes en énergies, l'installation telle que décrite ci-dessus permet de répondre aux souhaits en gestion des coûts énergétiques de ces cuisines professionnelles.

## Revendications

1. Procédé de nettoyage d'une installation de ventilation comportant :
- des moyens d'extraction (8) de l'air d'une première pièce (7a) contenant un air vicié chargé en graisses,
- des moyens d'insufflation (9) d'air dans une seconde pièce (7b),
- un récupérateur thermique muni d'un échangeur thermique (2) à double flux dans lequel passe un premier flux d'air (F₁, F₁') extrait de la première pièce (7a) et un second flux d'air (F₂, F₂') insufflé dans la seconde pièce (7b), lesdits premier et second flux d'air étant isolés l'un de l'autre,
- des moyens de nettoyage munis d'au moins un pulvérisateur (3) de produit de nettoyage placés dans le premier flux d'air (F₁, F₁') en amont de l'échangeur thermique (2) selon le sens d'écoulement du premier flux d'air (F₁, F₁'),
le procédé comportant au moins une étape (E4, E8, E11) de pulvérisation du produit de nettoyage, **caractérisé en ce qu'**il comprend une étape (E3, E7, E10) préalable à l'étape (E4, E8, E11) de pulvérisation et consistant à détecter si le premier flux d'air (F₁, F_{1'}) s'écoule dans l'échangeur (2) et **en ce que** l'étape (E4, E8, E11) de pulvérisation est mise en oeuvre uniquement si l'écoulement du premier flux d'air est détecté lors de l'étape préalable.

2. Procédé selon la revendication 1, **caractérisé en ce qu'**il consiste à alimenter le pulvérisateur (3) de produit de nettoyage à partir d'un réservoir (R) de produit de nettoyage.

3. Procédé selon la revendication 2, **caractérisé en ce que** le produit de nettoyage est pulvérisé à partir du réservoir (R) de produit de nettoyage sans adjonction d'eau.

4. Procédé selon l'une des revendications précédentes, **caractérisé en ce qu'**il consiste à pulvériser le produit de nettoyage sous la forme d'un brouillard sec.

5. Procédé selon l'une des revendications précédentes, **caractérisé en ce que** le produit pulvérisé est catalysé par la chaleur, et **en ce que**, lorsque la température du second flux d'air (F₂, F₂') en amont de l'échangeur thermique (2) est inférieure à une valeur seuil, la totalité du second flux d'air (F₂, F₂') est dérivée à l'extérieur de l'échangeur thermique (2).

6. Procédé selon l'une quelconque des revendications précédentes, **caractérisé en ce que** lorsque l'échangeur thermique (2) est encrassé, le produit de nettoyage est pulvérisé et/ou un message d'alerte est envoyé à des moyens de gestion d'alertes.

7. Récupérateur thermique à double flux comportant :
- des premier, deuxième, troisième et quatrième compartiments (1a, 1b, 1c, 1d).
- un échangeur thermique à flux croisés permettant le passage d'un premier flux d'air (F₁, F₁') entre les premier et deuxième compartiments (1a, 1b), et le passage d'un second flux d'air (F₂, F₂') entre les troisième et quatrième compartiments (1c, 1d),
- des moyens de nettoyage (3) disposés dans le premier compartiment et munis d'au moins un pulvérisateur (3) de produit de nettoyage, **caractérisé en ce qu'**il comporte des moyens (200) de détection de la circulation du premier flux d'air (F₁, F₁') dans l'échangeur (2) et des moyens (100) adaptés pour déclencher la pulvérisation du produit de nettoyage uniquement si le premier flux d'air circule dans l'échangeur (2).

8. Récupérateur selon la revendication 7, **caractérisé en ce qu'**il comporte des moyens de détection de l'encrassement de l'échangeur thermique (2).

9. Installation de ventilation comportant :
- des moyens d'extraction (8) de l'air d'une première pièce (7a) contenant un air vicié chargé en graisses, et
- des moyens d'insufflation (9) d'air dans une seconde pièce (7b),
**caractérisée en ce qu'**elle comporte en outre un récupérateur thermique selon l'une des revendications 7 et 8, **en ce que** le premier flux d'air (F₁, F₁') passant dans l'échangeur thermique (2) à double flux est extrait de la première pièce (7a) et le second flux d'air (F₂, F₂') passant dans l'échangeur thermique (2) à double flux est insufflé dans la seconde pièce (7b), lesdits premier et second flux d'air étant isolés l'un de l'autre, et **en ce que** le ou les pulvérisateurs (3) de produit de nettoyage sont placés dans le premier flux d'air (F₁, F₁') en amont de l'échangeur thermique (2) selon le sens d'écoulement du premier flux d'air (F₁, F₁').

10. Installation selon la revendication 9, **caractérisée en ce que** les moyens de nettoyage comprennent un réservoir (R) autonome
de produit de nettoyage apte à dégrader les huiles et/ou les graisses contenues dans le premier flux d'air (F₁, F₁').

11. Installation selon l'une des revendications 9 et 10, **caractérisée en ce que** le récupérateur thermique comporte un conduit interne (11) pour dériver le second flux d'air (F₂, F₂'), et **en ce que** l'échangeur thermique (2) et ledit conduit interne (11) étant chacun munis de moyens d'obturation permettant sélectivement
- d'autoriser les échanges thermiques entre le premier (F₁, F₁') et le second flux d'air (F₂, F₂'),
- de supprimer totalement ou partiellement lesdits échanges thermiques.

12. Installation selon la revendication 11, **caractérisée en ce qu'**elle comporte des première, deuxième et troisième sondes de températures respectivement représentatives de la température du, premier flux d'air (F₁, F₁') en amont de l'échangeur thermique (2), de la température du second flux d'air (F₂, F₂') en aval de l'échangeur thermique (2) et de la température du second flux d'air (F₂, F₂') en amont de l'échangeur thermique (2), et **en ce qu'**elle comporte des moyens (100) adaptés pour contrôler les moyens d'obturation pour contrôler la température de l'air insufflé dans la seconde pièce (7b) en fonction des données des sondes de température.

13. Installation selon la revendication 12, **caractérisée en ce que** les moyens adaptés pour déclencher la pulvérisation du produit de nettoyage et/ou les moyens adaptés pour contrôler les moyens d'obturation comprennent une unité de contrôle (100) apte à communiquer (S200, S18) avec les moyens de détection (200) et les moyens de nettoyage.

14. Installation selon l'une quelconque des revendications 9 à 13, **caractérisée en ce que** la première pièce (7a) et la seconde pièce (7b) sont identiques et correspondent à un local de préparations culinaires.

## Patentansprüche

1. Verfahren zum Reinigen einer Belüftungsanlage, umfassend:
- Mittel (8) zum Extrahieren von Luft aus einem ersten Raum (7a), der eine mit Fetten beladene verschmutzte Luft enthält,
- Mittel (9) zum Einblasen von Luft in einen zweiten Raum (7b),
- eine Wärmerückgewinnungsvorrichtung, die mit einem Doppelstrom-Wärmetauscher (2) ausgerüstet ist, durch den ein erster, aus dem ersten Raum (7a) herausgezogener Luftstrom (F₁, F₁') und ein zweiter Luftstrom (F₂, F₂'), der in den zweiten Raum 7b) eingeblasen wird, hindurchgeht, wobei der erste Luftstrom und der zweite Luftstrom voneinander isoliert sind,
- Reinigungsmittel, die mit mindestens einem Zerstäuber (3) für einen Reinigungsstoff ausgerüstet sind und die in dem ersten Luftstrom (F₁, F₁') gemäß der Strömungsrichtung des ersten Luftstroms (F₁, F₁') vor dem Wärmetauscher angeordnet sind,
wobei das Verfahren mindestens einen Schritt (E4, E8, E11) des Zerstäubens des Reinigungsstoffs aufweist, **dadurch gekennzeichnet, dass** es einen Schritt (E3, E7, E10) vor dem Schritt (E4, E8, E11) des Zerstäubens umfasst, der darin besteht, zu detektieren, ob der erste Luftstrom (F₁, F₁') in den Wärmetauscher (2) strömt, und dass der Schritt (E4, E8, E11) des Zerstäubens nur durchgeführt wird, wenn die Strömung des ersten Luftstroms bei dem vorhergehenden Schritt detektiert wird.

2. Verfahren nach Anspruch 1, **dadurch gekennzeichnet, dass** es darin besteht, den Zerstäuber (3) aus einem Behälter (R) für Reinigungsstoff zu versorgen.

3. Verfahren nach Anspruch 2, **dadurch gekennzeichnet, dass** der Reinigungsstoff aus dem Behälter (R) für Reinigungsstoff ohne die Hinzufügung von Wasser zerstäubt wird.

4. Verfahren nach einem der vorhergehenden Ansprüche, **dadurch gekennzeichnet, dass** es drin besteht, den Reinigungsstoff in Form eines trockenen Nebels zu zerstäuben.

5. Verfahren nach einem der vorhergehenden Ansprüche, **dadurch gekennzeichnet, dass** der zerstäubte Stoff durch die Wärme katalysiert wird, und dass, wenn die Temperatur des zweiten Luftstroms(F₂, F₂') vor dem Wärmetauscher (2) kleiner als ein Schwellenwert ist, die Gesamtheit des zweiten Luftstroms bezüglich des Wärmetauschers (2) nach außen abgeleitet wird.

6. Verfahren nach einem beliebigen der vorhergehenden Ansprüche, **dadurch gekennzeichnet, dass**, wenn der Wärmetauscher (2) verschmutzt ist, der Reinigungsstoff zerstäubt wird und/oder eine Warnnachricht an Mittel zum Behandeln von Warnungen geschickt wird.

7. Doppelstrom-Wärmerückgewinnungsvorrichtung, umfassend:
- ein erstes, zweites, drittes und viertes Abteil (1a, 1b, 1c, 1d),
- einen Kreuzstrom-Wärmetauscher, der den Durchfluss eines ersten Luftstroms (F₁, F₁') zwischen dem ersten und dem zweiten Abteil (1a, 1b) und den Durchfluss eines zweiten Luftstroms (F₂, F₂') zwischen dem dritten und vierten Abteil (1c, 1d) ermöglicht,
- Reinigungsmittel (3), die in dem ersten Abteil angeordnet sind und mit mindestens einem Zerstäuber für Reinigungsstoff ausgerüstet sind,
**dadurch gekennzeichnet, dass** sie Mittel (200) zur Erfassung der Zirkulation des ersten Luftstroms (F₁, F₁') in dem Wärmetauscher (2) und Mittel (100) umfasst, die ausgebildet sind, die Zerstäubung des Reinigungsstoffs auszulösen, nur wenn der erste Luftstrom in dem Wärmetauscher (2) zirkuliert.

8. Rückgewinnungsvorrichtung nach Anspruch 7, **dadurch gekennzeichnet. dass** sie Mittel zur Erfassung der Verschmutzung des Wärmetauschers (2) umfasst.

9. Lüftungsanlage, umfassend:
- Mittel (8) zum Extrahieren von Luft aus einem ersten Raum (7a), der mit Fetten beladene verschmutzte Luft enthält, und
- Mittel (9) zum Einblasen von Luft in einen zweiten Raum (7b),
**dadurch gekennzeichnet, dass** sie außerdem eine Wärmerückgewinnungsvorrichtung nach einem der Ansprüche 7 und 8 aufweist, und dass der erste Luftstrom (F₁, F₁'), der durch den Doppelstrom-Wärmetauscher (2) hindurchgeht, aus dem ersten Raum (7a) extrahiert wird und der zweite Luftstrom (F₂, F₂'), der durch den Doppelstrom-Wärmetauscher (2) hindurchgeht, in den zweiten Raum (7b) eingeblasen wird, wobei der erste und zweite Luftstrom voneinander isoliert sind, und dass der oder die Zerstäuber für Reinigungsstoff in dem ersten Luftstrom (F₁, F₁') gemäß der Strömungsrichtung des ersten Luftstroms (F₁, F₁') vor dem Wärmetauscher (2) angeordnet sind.

10. Anlage nach Anspruch 9, **dadurch gekennzeichnet, dass** die Reinigungsmittel einen autonomen Behälter (R) für Reinigungsstoff umfassen, der geeignet ist, die in dem ersten Luftstrom (F₁, F₁') enthaltenen Öle und/oder Fette abzubauen.

11. Anlage nach einem der Ansprüche 9 und 10, **dadurch gekennzeichnet, dass** die Wärmerückgewinnungsvorrichtung einen Innenkanal (11) zum Ableiten des zweiten Luftstroms (F₂, F₂') aufweist und dass der Wärmetauscher (2) und der Innenkanal (11) jeweils mit Verschließmitteln ausgerüstet sind, die wahlweise ermöglichen,
- den Wärmeaustausch zwischen dem ersten (F₁, F₁') und dem zweiten (F₂, F₂') Luftstrom zuzulassen,
- den Wärmeaustausch vollständig oder teilweise wegzulassen.

12. Anlage nach Anspruch 11, **dadurch gekennzeichnet, dass** sie einen ersten, zweiten und dritten Temperatursensor aufweist, die jeweils die Temperatur des ersten Luftstroms (F₁, F₁') vor dem Wärmetauscher (2) die Temperatur des zweiten Luftstroms (F₂, F₂') nach dem Wärmetauscher (2) und die Temperatur des zweiten Luftstroms (F₂, F₂') vor dem Wärmetauscher (2) repräsentieren, und dass sie Mittel (100) aufweist, die angepasst sind, die Verschließmittel zum Steuern der in den zweiten Raum (7b) eingeblasenen Luft abhängig von den Daten der Temperatursensoren zu steuern.

13. Anlage nach Anspruch 12, **dadurch gekennzeichnet, dass** die zum Auslösen der Zerstäubung des Reinigungsstoffes angepassten Mittel und/oder die um Steuern der Verschließmittel angepassten Mittel eine Steuereinheit (100) umfassen, die geeignet ist, mit den Erfassungsmitteln (200) und den Reinigungsmitteln zu kommunizieren (S200, S18).

14. Anlage nach einem beliebigen der Ansprüche 9 bis 13, **dadurch gekennzeichnet, dass** der erste Raum (7a) und der zweite Raum (7b) identisch sind und einem Ort der Zubereitung von Nahrungsmitteln entsprechen.

## Claims

1. Method for cleaning a ventilation installation comprising:
- extraction means (8) for extracting air from a first room (7a) containing used air loaded with fats,
- insufflation means (9) for blowing air into a second room (7b),
- a heat recovery unit provided with a double-flow heat exchanger (2) into which there pass a first airflow (F₁, F₁') extracted from the first room (7a) and a second airflow (F₂, F₂') blown into the second room (7b), said first and second airflows being isolated from one another,
- cleaning means which are provided with at least one atomiser (3) for cleaning product and are placed in the first airflow (F₁, F₁') upstream of the heat exchanger (2) in the direction of flow of the first airflow (F₁, F₁'),
the method comprising at least one step (E4, E8, E11) of atomising the cleaning product, **characterised in that** it comprises a step (E3, E7, E10) which precedes the atomising step (E4, E8, E11) and consists in detecting whether the first airflow (F₁, F₁') is flowing in the exchanger (2), and **in that** the atomising step (E4, E8, E11) is carried out only if the flow of the first airflow is detected in the preceding step.

2. Method according to claim 1, **characterised in that** it consists in supplying the atomiser (3) for cleaning product from a reservoir (R) for cleaning product.

3. Method according to claim 2, **characterised in that** the cleaning product is atomised from the reservoir (R) for cleaning product without the addition of water.

4. Method according to any one of the preceding claims, **characterised in that** it consists in atomising the cleaning product in the form of a dry mist.

5. Method according to any one of the preceding claims, **characterised in that** the atomised product is catalysed by heat, and **in that**, when the temperature of the second airflow (F₂, F₂') upstream of the heat exchanger (2) is below a threshold value, the entire second airflow (F₂, F₂') is diverted outside the heat exchanger (2).

6. Method according to any one of the preceding claims, **characterised in that**, when the heat exchanger (2) is clogged, the cleaning product is atomised and/or a warning message is sent to warning management means.

7. Double-flow heat recovery unit comprising:
- first, second, third and fourth compartments (1 a, 1 b, 1 c, 1 d),
- a cross-flow heat exchanger permitting the passage of a first airflow (F₁, F₁') between the first and second compartments (1 a, 1 b) and the passage of a second airflow (F₂, F₂') between the third and fourth compartments (1 c, 1 d),
- cleaning means (3) arranged in the first compartment and provided with at least one atomiser (3) for cleaning product,
**characterised in that** it comprises means (200) of detecting the circulation of the first airflow (F₁, F₁') in the exchanger (2) and means (100) adapted to initiate atomisation of the cleaning product only if the first airflow is circulating in the exchanger (2).

8. Recovery unit according to claim 7, **characterised in that** it comprises means of detecting clogging of the heat exchanger (2).

9. Ventilation installation comprising:
- extraction means (8) for extracting air from a first room (7a) containing used air loaded with fats, and
- insufflation means (9) for blowing air into a second room (7b),
**characterised in that** it further comprises a heat recovery unit according to either claim 7 or claim 8, **in that** the first airflow (F₁, F₁') passing into the double-flow heat exchanger (2) is extracted from the first room (7a) and the second airflow (F₂, F₂') passing into the double-flow heat exchanger (2) is blown into the second room (7b), said first and second airflows being isolated from one another, and **in that** the atomiser or atomisers (3) for cleaning product are placed in the first airflow (F₁, F₁') upstream of the heat exchanger (2) in the direction of flow of the first airflow (F₁, F₁').

10. Installation according to claim 9, **characterised in that** the cleaning means comprise an autonomous reservoir (9) for cleaning product capable of breaking down the oils and/or fats contained in the first airflow (F₁, F₁').

11. Installation according to either claim 9 or claim 10, **characterised in that** the heat recovery unit comprises an inner pipe (11) for diverting the second airflow (F₂, F₂'), and **in that** the heat exchanger (2) and said inner pipe (11), each being provided with closing means, selectively permit
- the authorisation of heat exchanges between the first airflow (F₁, F₁') and the second airflow (F₂, F₂'),
- the total or partial suppression of said heat exchanges.

12. Installation according to claim 11, **characterised in that** it comprises first, second and third temperature sensors which are representative, respectively, of the temperature of the first airflow (F₁, F₁') upstream of the heat exchanger (2), of the temperature of the second airflow (F₂, F₂') downstream of the heat exchanger (2), and of the temperature of the second airflow (F₂, F₂') upstream of the heat exchanger (2), and **in that** it comprises means (100) which are adapted for controlling the closing means in order to control the temperature of the air blown into the second room (7b) as a function of the data of the temperature sensors.

13. Installation according to claim 12, **characterised in that** the means adapted for initiating atomisation of the cleaning product and/or the means adapted for controlling the closing means comprise a control unit (100) capable of communicating (S200, S18) with the detection means (200) and the cleaning means.

14. Installation according to any one of claims 9 to 13, **characterised in that** the first room (7a) and the second room (7b) are identical and correspond to food preparation premises.
